# EUROPEAN PATENT SPECIFICATION

(11) **EP 4 658 535 B1**
(45) Date of publication and mention of the grant of the patent: **02.09.2026**
(21) Application number: 23704066.2
(22) Date of filing: 31.01.2023
(51) Int. Cl.: B60T 8/88, B60W 10/04

(54) **A COMPUTER SYSTEM FOR MONITORING AND CONTROLLING VEHICLE BEHAVIOUR**
COMPUTERSYSTEM ZUR ÜBERWACHUNG UND STEUERUNG DES FAHRZEUGVERHALTENS
SYSTÈME INFORMATIQUE DE SURVEILLANCE ET DE COMMANDE DE COMPORTEMENT DE VÉHICULE

(43) Date of publication of application: 10.12.2025
(73) Proprietor: VOLVO TRUCK CORPORATION, 405 08 Göteborg (SE)
(72) Inventor: RYDSTRÖM, Mats, 427 39 Billdal (SE); JONASSON, Mats, 433 49 Partille (SE); ARIKERE, Adithya, Göteborg (SE)
(74) Representative: Ström & Gulliksson AB
(86) International application number: PCT/EP2023/052362
(87) International publication number: WO 2024/160363

(56) References cited:
- WO-A1-2021/222384
- WO-A1-2022/184258
- US-A1- 2020 257 291
- US-B1- 9 315 178

## Description

### TECHNICAL FIELD

This disclosure relates generally to control of heavy-duty vehicles such as trucks, busses, and construction equipment. In particular aspects, the disclosure relates to a computer-implemented vehicle behavior monitor arranged to automatically trigger an action by the vehicle in case a measured vehicle behavior deviates too much from an expected vehicle behavior in response to a control input. Although the disclosure may be described with respect to a particular vehicle type, the disclosure is not restricted to any particular vehicle type.

### BACKGROUND

Modem systems for vehicle motion management (VMM) rely on accurate knowledge of a number of vehicle parameters, such as vehicle weight and vehicle geometry, to control vehicle actuators in order to obtain a desired vehicle motion. It is a challenge to maintain a relevant set of configured vehicle parameters over time, since the parameters may change unexpectedly. Parameters related to the vehicle surroundings are also sometimes used in the control of a heavy-duty vehicle, such as estimated road friction coefficients and the like.

For example, heavy-duty vehicles have traditionally been controlled using torque request signals generated based on the position of an accelerator or brake pedal and sent to motion support devices (MSDs) such as service brakes and propulsion devices over digital interfaces. However, advantages may be obtained by instead controlling the actuators using wheel slip or wheel speed requests sent from a central vehicle controller to the different actuators. This moves the actuator control closer to the wheel end, and therefore allows for a reduced latency and a faster more accurate control of the MSDs. Wheel-slip based vehicle motion management (VMM) and its associated advantages are discussed, e.g., in WO 2017/215751. Wheel slip and wheel speed-based control of heavy-duty vehicles rely at least to some extent on accurate knowledge of the current vehicle behavior, such as the vehicle speed over ground and the rotation speed of the wheels, as well as vehicle parameters such as the tyre radii of the wheels and the relationship between wheel slip and generated wheel force.

It is important that a VMM system for a heavy-duty vehicle has access to reliable information regarding vehicle parameters, otherwise erroneous vehicle control decisions may result.

US 9315178 B1 describes a vehicle designed to operate autonomously, capable of predicting its output based on an input to control the vehicle and the vehicle's state. The method includes receiving an input indication from at least one input-indication sensor and an output indication from at least one output-indication sensor. It then calculates a predicted output value based on the input indication and the vehicle's state. This predicted output value is compared with the output indication. If the comparison falls outside a threshold range, an alert indicator is generated. Following the creation of the alert indicator, an alert action is activated.

### SUMMARY

There is disclosed a computer system for controlling a heavy-duty vehicle which may solve or at least alleviate one or more of the above-mentioned issues in the prior art. The computer system comprises processing circuitry configured to obtain a vehicle model which in turn comprises a set of configured vehicle parameters. The vehicle model is arranged to estimate a motion response by the vehicle to a control command based on the set of configured vehicle parameters. The processing circuitry is configured to receive a vehicle control command issued to control motion by the vehicle and/or one or more reports of applied actuator operations received, e.g., from one or more actuator control units, and to estimate a vehicle response to the vehicle control command based on the vehicle model and on the vehicle control command. The estimated vehicle response comprises a number of observable state variables and a number of non-observable or hidden state variables. The processing circuitry is configured to obtain sensor measurements of state variables of the heavy-duty vehicle corresponding to the observable state variables of the vehicle model, and to determine a difference between the sensor measurements of the state variables and the corresponding observable state variables of the vehicle model. The processing circuitry is configured to automatically trigger an action by the heavy-duty vehicle in case the difference does not satisfy a predetermined acceptance criterion. The triggered action by the heavy-duty vehicle comprises a change in operational design domain (ODD) of the vehicle.

This way the behavior of the vehicle is monitored in order to make sure that the behavior of the vehicle is in line with an expected vehicle behavior. The hidden state variables cannot be observed directly by sensors, but they still influence the observable variables. If the vehicle starts to behave differently compared to the expected vehicle behavior, given the assumed set of vehicle parameters, then something may be wrong, and an action by the vehicle may be required in order to ensure continued safe operation by the vehicle. A VMM system having access to the information provided by the disclosed computer system is able to assess whether the vehicle parameters assumed when controlling the vehicle are reasonably correct, or if significant parameters errors are present which may jeopardize safe and efficient vehicle control. The predetermined acceptance criterion may, e.g., comprise a comparison of the determined difference between the sensor measurements of the state variables and the corresponding observable state variables of the vehicle model in relation to a predetermined threshold value or acceptable range of differences, or more advanced statistical tests applied to the determined difference, such as a check to determine if a statistical distribution of the determined difference agrees with an expected statistical distribution. The vehicle model may comprise a traditional model of vehicle dynamics, such as a one-track "bicycle" model of vehicle dynamics or a double-track model of vehicle dynamics. More advanced models can of course also be used in this manner. Alternatively, or as a complement, the vehicle model comprises a machine learning structure which has been trained using a given set of vehicle parameters to model the vehicle behavior in response to a vehicle control command. The vehicle model may be pre-configured and fixed, or adapted over time as the vehicle is operated.

The set of configured vehicle parameters may for instance comprise a relationship between wheel slip and wheel longitudinal force and/or a relationship between wheel slip and wheel lateral force capability. Thus, the techniques disclosed herein are advantageously combined with the type of wheel slip based heavy-duty vehicle control systems discussed above. The computer system will monitor the assumed relationships between wheel slip and generated wheel force, and also parameters such as tyre radii which impact the wheel slip and detect when the assumed parameters disagree with the physical reality. The set of configured vehicle parameters may also comprise a road friction coefficient and/or a road surface normal force, which are important parameters that determine how much wheel force that a given wheel is able to generate. If this wheel force generating capability is overestimated, then vehicle control assumed possible by the VMM function may in fact be impossible, which could result in undesired hazards. If the wheel force generating capability is instead underestimated then inefficient operation may result, where the wheel actuators are not used to their full force generating potential. Other vehicle parameters that can be monitored in this way are tyre radius for one or more wheels and tyre slip stiffness values.

The set of configured vehicle parameters may, e.g., comprise any of a geometry of the heavy-duty vehicle such as a wheelbase length, a track width, and so on, a weight of the heavy-duty vehicle, a suspension pressure on an axle of the heavy-duty vehicle, and a center of gravity of the heavy-duty vehicle. These vehicle parameters play an important part in determining how the vehicle will respond to a control command. If they are configured in error, then the vehicle and the digital model of the vehicle will behave differently. A vehicle behaving in an unexpected manner may cause inconvenience at best and hazard at worst. It is appreciated that the above list of vehicle parameters are mere examples, and that there are many more vehicle parameters which can be monitored using the techniques discussed herein. The vehicle model may be arranged to determine any of a lateral and/or longitudinal speed of the vehicle in response to the control command, a lateral and/or longitudinal acceleration by the vehicle, a yaw rate, a pitch rate, and a roll rate, based on the set of configured vehicle parameters. These are of course also examples, and more indicators of vehicle behavior can be added to this list. The vehicle control command optionally comprises a requested acceleration and/or a requested curvature by the vehicle, such as an accelerator pedal or brake pedal command given by a vehicle driver or an autonomous drive algorithm. A steering wheel input can be used as indicator of vehicle curvature. The vehicle control command may also comprise a motion support device control allocation determined by a vehicle motion management system module.

The sensor measurements of the state variables of the heavy-duty vehicle optionally comprise one or more out of IMU data indicative of vehicle acceleration, wheel speed sensor data indicative of wheel rotary motion, steering angle data indicative of a wheel angle, and wheel torque data. This measured data can be compared to the observable variables of the digital vehicle model, and differences can be identified that are indicative of a parameter error.

According to some aspects the processing circuitry is configured to process the observable state variables of the vehicle model using respective sensor models. These sensor models represent effects added when measuring the observable state variables, such as measurement noise, bias, and interference. The models may be used to describe expected differences between sensed data and modelled data. All sensors are associated with some level of noise which will appear as a difference between the observable state variables of the digital vehicle model and the measured variables of the physical vehicle obtained from sensor systems. By adding models of the sensors in this manner, the likelihood that an observed difference is due to measurement noise compared to the likelihood that a difference is due to an actual parameter error can be evaluated.

The triggered action by the heavy-duty vehicle may comprise, e.g., a warning signal issued to a driver of the vehicle, or a notification sent to an autonomous or semi-autonomous control system of the vehicle. The triggered action by the heavy-duty vehicle may also comprise a change in operational design domain (ODD) of the vehicle, such as a reduction in maximum vehicle allowable speed over ground by the vehicle or a maximum curvature or lateral force generated on one or more tyres of the vehicle.

According to other aspects, the triggered action by the heavy-duty vehicle comprises an emergency stop operation, where the vehicle is brought to a full stop in a safe manner, due to a detected discrepancy between assumed vehicle parameters and actual physical vehicle parameters.

According to some aspects, the vehicle model comprises a plurality of vehicle sub-models based on different sets of configured vehicle parameters. Each vehicle sub-model is arranged to determine a respective motion response by the vehicle to the control command and the processing circuitry is configured to determine a variation in the respective motion responses estimated by the sub-models, and to control the vehicle based on the determined variation. A more cautious vehicle control may, e.g., be warranted in case a large spread is observed, at least if the vehicle parameter that is being varied over the sub-models is not known with high precision. The processing circuitry is optionally also configured to select a vehicle sub-model out of the plurality of vehicle sub-models based on the differences between the sensor measurements of the state variables and the corresponding observable state variables of the vehicle sub-models. Thus, the techniques disclosed herein may also be used to estimate one or more vehicle parameters.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer systems, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
- Figure 1: illustrates an example heavy-duty vehicle,
- Figure 2: is a graph showing example tyre forces as function of wheel slip,
- Figures 3-5: schematically illustrate aspects of an example vehicle control system,
- Figure 6: is a schematic diagram of an exemplary computer system,
- Figure 7: is a flow chart illustrating methods, and
- Figure 8: shows an example computer program product.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference characters refer to like elements throughout the description.

Aspects set forth below represent the necessary information to enable those skilled in the art to practice the disclosure.

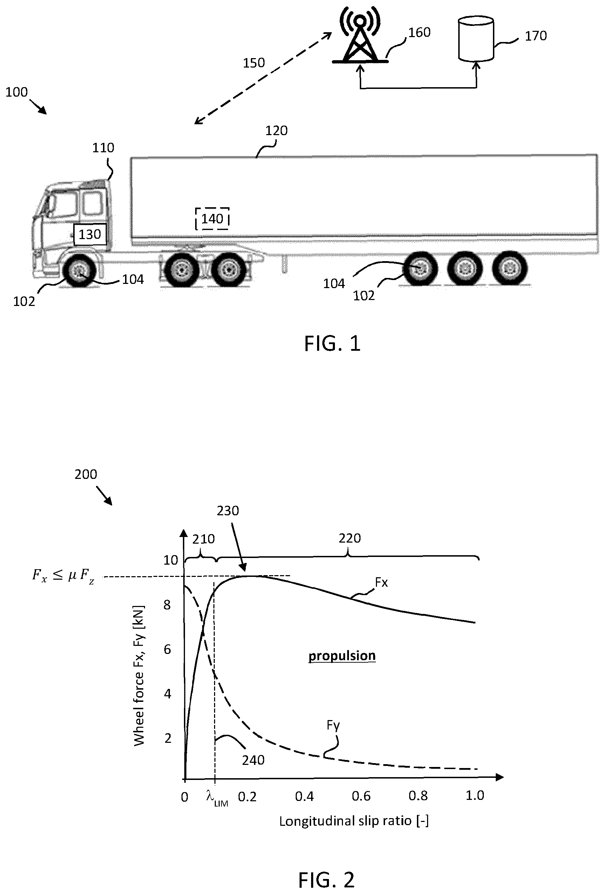

Figure 1 illustrates an example heavy-duty vehicle 100, here in the form of a truck comprising a tractor 110 and a trailer 120. The vehicle 100 comprises a plurality of wheels 102, wherein at least a subset of the wheels 102 comprises a respective motion support device (MSD) 104, such as a service brake, an electric machine, a power steering arrangement, active suspension, and/or a power transmission that connects the wheel to a motor such as a combustion engine or central electric machine. It should be readily understood that one or more pairs of wheels may be arranged without an MSD. Also, an MSD may be arranged connected to more than one wheel, e.g., via a differential drive arrangement.

It is appreciated that the herein disclosed methods, computer systems and computer-implemented control units can be applied with advantage also in other types of heavy-duty vehicles, such as trucks with drawbar connections, construction equipment, buses, and the like. The vehicle 100 may also comprise more than two vehicle units, i.e., a dolly vehicle unit may be used to tow more than one trailer.

The vehicle 100 comprises a computer-implemented control system arranged to control vehicle motion, among other things. This control system may comprise one or more control units 130, 140 distributed over the vehicle or centralized at one place. Each vehicle control unit 130, 140 may comprise one or more processor devices. A processor device may also be distributed over several spatially separated units or centralized in one place. The control system, or parts thereof, may be arranged to communicate via wireless link 150 to a wireless access point 160, such as a radio base station 160 of a cellular access network or the like. Thus, the vehicle control system may communicate with one or more remote servers 170, data repositories, and remote processing resources, in order to exchange data and perform various computation tasks. The vehicle control system 130, 140 may be referred to as a system for vehicle motion management (VMM). It is appreciated that the functions described herein may be executed by processing circuitry on-board the vehicle 100 and/or by processing circuitry arranged external to the vehicle, such as at the remote server 170.

Herein, longitudinal speed over ground may be determined relative to the vehicle, in which case the speed direction refers to the forward direction of the vehicle. Longitudinal speed over ground may also be given relative to a wheel, in which case the speed direction refers to the forward direction, or rolling direction, of the wheel. The same is true for lateral speed over ground, which can be either a lateral speed of the vehicle over ground or a lateral speed of a wheel over ground relative to its rolling direction. The meaning will be clear from context, and it is appreciated that a straight-forward conversion can be applied in order to translate speed over ground between the coordinate system of the vehicle and the coordinate system of the wheel, and vice versa.

Longitudinal wheel slip *λₓ* may, in accordance with SAE J370 (SAE Vehicle Dynamics Standards Committee January 24, 2008) be defined as ${λ}_{x} = \frac{{Rω}_{x} - {v}_{x}}{max \left(\left|{Rω}_{x}\right|, \left|{v}_{x}\right|\right)}$ where R is an effective wheel radius (sometimes referred to as an effective wheel rolling radius) in meters, *ωₓ* is the angular velocity of the wheel, and *vₓ* is the longitudinal speed of the wheel (in the coordinate system of the wheel). Thus, *λₓ* is bounded between -1 and 1 and quantifies how much the wheel is slipping with respect to the road surface. Wheel slip is, in essence, a speed difference measured between the wheel and the vehicle. To determine wheel slip in an accurate manner, all parameters in the expression needs to be known. For instance, errors in the determined wheel slip will be introduced if the tyre radius *R* of a wheel on the vehicle is not correctly configured.

Slip angle *α*, also known as sideslip angle, is the angle between the direction in which a wheel is pointing and the direction in which it is actually traveling (i.e., the angle between the longitudinal velocity component *vₓ* and the vector sum of wheel forward velocity *vₓ* and lateral velocity *v_{y}*. This slip angle results in a force, the cornering force, which is in the plane of the contact patch and perpendicular to the intersection of the contact patch and the midplane of the wheel. The cornering force increases approximately linearly for the first few degrees of slip angle, then increases non-linearly to a maximum before beginning to decrease.

The slip angle, *α* is often defined as $α = arctan \left(\frac{{v}_{y}}{\left|{v}_{x}\right|}\right)$ where *v_{y}* is the lateral speed of the wheel in the coordinate system of the wheel. The wheel longitudinal velocity is often possible to observe using a wheel speed sensor, while the wheel lateral velocity is more difficult to observe using sensor systems.

In order for a wheel (or tyre) to produce a wheel force which affects the motion state of the heavy-duty vehicle, such as an acceleration, slip must occur. For smaller slip values the relationship between slip and generated force is approximately linear, where the proportionality constant is often denoted as the slip stiffness *Cₓ* of the tyre. The slip stiffness *Cₓ* of the tyres on a given vehicle are vehicle parameters that become central in case the vehicle is controlled based on wheel slip and/or based on wheel speed instead of based on torque. In case the slip stiffness of the tyres on a vehicle are erroneously configured, then the vehicle control may be affected in a negative manner, which of course is undesired. The slip stiffness *Cₓ* of the tyres on the wheels 102 of the vehicle 100 is therefore an important parameter when performing wheel slip-based control of vehicle actuators such as electric machines and service brakes.

A tyre is subject to a longitudinal force Fₓ, a lateral force F_{y}, and a normal force F_{z}. The normal force F_{z} is key to determining some important vehicle properties. For instance, the normal force to a large extent determines the achievable longitudinal tyre force Fₓ by the wheel since, normally, *Fₓ* ≤ *µ F_{z},* where *µ* is a friction coefficient associated with a road friction condition. The friction coefficient *µ* and the normal force *F_{z}* are both important vehicle parameters which, if configured incorrectly, could have a negative impact on the precision with which a vehicle can be controlled. The normal force *F_{z}* acting on a given wheel can often be determined at least approximately if the vehicle weight is known, at least if the weight distribution of the vehicle over the wheels is known.

Figure 2 is a graph showing an example 200 of achievable tyre forces as function of longitudinal wheel slip. Fx is the longitudinal tyre force while Fy is the maximum obtainable lateral wheel force for a given longitudinal wheel slip *λₓ*. This type of relationship between wheel slip and generated tyre force is often referred to as an inverse tyre model, and it is generally known. The examples in Figure 2 are for positive wheel forces, i.e., propulsion. Similar relationships exist between wheel slip and negative wheel force, i.e., braking.

An inverse tyre model can be used to translate between a desired longitudinal tyre force Fₓ and longitudinal wheel slip *λₓ*. The interface between VMM and MSDs capable of delivering torque to the vehicle's wheels has as mentioned above traditionally been focused on torque-based requests to each MSD from the VMM without any consideration towards wheel slip. However, this approach has some performance limitations. In case a safety critical or excessive slip situation arises, then a relevant safety function (traction control, anti-lock brakes, etc.) operated on a separate control unit normally steps in and requests a torque override in order to bring the slip back into control. The problem with this approach is that since the primary control of the actuator and the slip control of the actuator are allocated to different electronic control units (ECUs), the latencies involved in the communication between them significantly limits the slip control performance. Moreover, the related actuator and slip assumptions made in the two ECUs that are used to achieve the actual slip control can be inconsistent and this in turn can lead to sub-optimal performance. Significant benefits can be achieved by instead using a wheel speed or wheel slip-based request on the interface between VMM and the MSD controller or controllers, thereby shifting the difficult actuator speed control loop to the MSD controllers, which generally operate with a much shorter sample time compared to that of the VMM system. Such an architecture can provide much better disturbance rejection compared to a torque-based control interface and thus improves the predictability of the forces generated at the tyre road contact patch.

Referring again to Figure 2, the example longitudinal tyre force Fx shows an almost linearly increasing part 210 for small wheel slips, followed by a part 220 with more non-linear behavior for larger wheel slips. It is desirable to maintain vehicle operation in the linear region 210, where the obtainable longitudinal force in response to an applied brake command is easier to predict, and where enough lateral tyre force can be generated if needed. To ensure operation in this region, a wheel slip limit λₗᵢₘ 240 on the order of, e.g., 0.1 or so, can be imposed on a given wheel. Thus, having accurate knowledge of current wheel slip, operation in the linear region can be ensured, which greatly simplifies vehicle motion control for both safety, efficiency, and driver comfort.

A potential problem with this approach to motion management in a heavy-duty vehicle such as the vehicle 100 is that the assumed relationship between wheel slip and generated wheel force may be erroneous. The road friction coefficient *µ* and/or the normal force *F_{z}* configured in the VMM system may, for instance, be configured with an error. The relationships *Fₓ* and *F_{y}* may also be erroneously configured, which could lead to a sub-optimal vehicle control. Even if classic torque-based control is executed by the VMM system on the heavy-duty vehicle, erroneous assumption of vehicle parameters may be detrimental to the performance of the vehicle control. Errors in assumed tyre radius *Rᵢ* and/or tyre slip stiffness *Cₓ* will shift the relationships in the graph 200.

Errors in configured vehicle weight and/or vehicle geometry may lead to underestimating or overestimating the forces needed to change vehicle motion. All-in-all, errors in configured vehicle parameters may cause errors in estimated vehicle state, and also that the response by the vehicle to a control command, such as an increase or decrease in wheel force, applied steering, etc., will give an effect on the behavior of the vehicle that differs from the one expected, which is normally not good.

It has been realized that a digital vehicle model or digital twin of the physical vehicle 100 can be implemented in the vehicle control system (onboard the vehicle or remote from the vehicle) and used to verify that the vehicle behaves as expected given the configured set of vehicle parameters. The digital vehicle model is stimulated by the same control input commands as the physical vehicle (for instance applied wheel force), and the response by the physical vehicle to the control commands is compared to the response by the digital model to the same control commands. The response by the vehicle to the control commands can be measured by sensors such as wheel speed sensors and inertial measurement units (IMU), and the response by the digital model can be extracted directly from the model as observable model parameters or using more advanced models of sensor systems corresponding to the sensor systems onboard the vehicle. If the behavior of the digital vehicle model differs significantly from that of the physical vehicle in response to some control input, an action by the vehicle may be triggered, such as a warning signal issued to a driver of the vehicle, in order to alert the driver about the likely error in the configured vehicle parameters. The digital twin of the physical vehicle is executed in parallel with the operations of the physical vehicle, and a monitor is applied to verify that the "motion" by the digital twin in the simulation environment corresponds reasonably well to the motion by the physical vehicle in the real world. If this is not the case some action is triggered. The operational design domain of the vehicle may, for instance, be reduced, such that the speed and lateral forces is reduced. An emergency stop maneuver may also be triggered in case the discrepancy between vehicle model behavior and physical vehicle behavior differs significantly. A warning can also be issued to a driver if one is present, or to a remote control function in case of an autonomous vehicle.

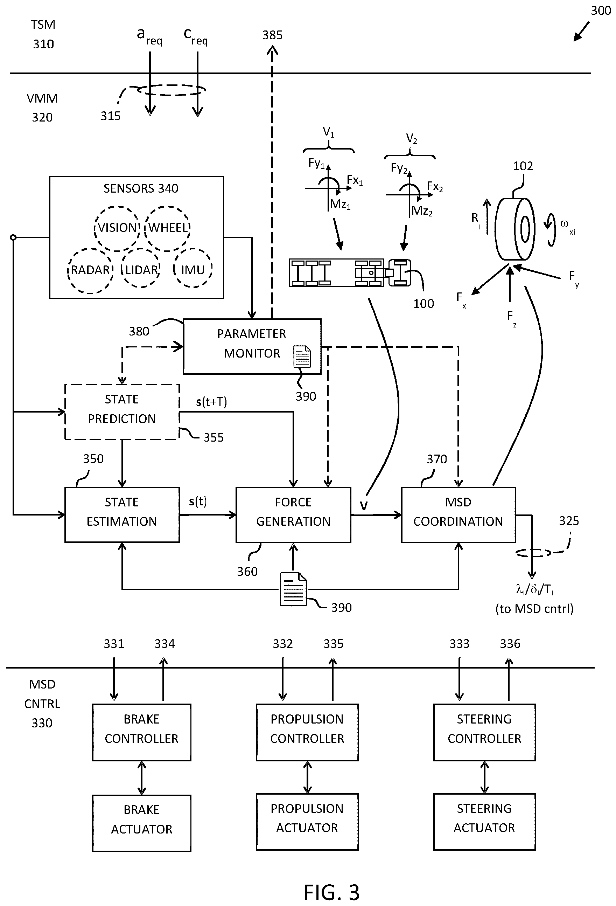

Figure 3 schematically illustrates functionality 300 for controlling the vehicle 100 by some example MSDs here comprising brake actuators, propulsion actuators, and power steering, with respective controllers collectively referred to in Figure 3 as MSD control 330. A traffic situation management (TSM) function 310 plans driving operation with a time horizon of 10 seconds or so. This time frame corresponds to, e.g., the time it takes for the vehicle 100 to negotiate a curve or the like. The vehicle maneuvers, planned and executed by the TSM function 310, can be associated with acceleration profiles a_{req} and curvature profiles c_{req} which describe a desired target vehicle velocity in the vehicle forward direction and turning to be maintained for a given maneuver. The TSM function continuously requests the desired acceleration profiles a_{req} and steering angles (or curvature profiles c_{req}) from the VMM system 320 which performs force allocation to meet the requests from the TSM function in a safe and robust manner. The VMM system 320 operates on a timescale of below one second or so and will be discussed in more detail below.

Each wheel 102 on the vehicle has a longitudinal velocity component *vₓ* and a lateral velocity component *v_{y}* (in the coordinate system of the wheel or in the coordinate system of the vehicle, depending on implementation). There is a longitudinal wheel force Fₓ and a lateral wheel force F_{y}, and also a normal force F_{z} acting on the wheel, as illustrated in Figure 3. The wheel has a rotational velocity *ωₓ*, and a tyre radius R. The vehicle is generally associated with a set of vehicle parameters which describe the vehicle. These parameters determine how the vehicle will respond to an applied force. The environment that the vehicle travels through is also associated with a set of parameters. The environment parameters are herein assumed to be part of the vehicle parameters.

The inverse tyre models exemplified by the graph 200 in Figure 2 are vehicle parameters that can be used by the VMM function 320 to generate a desired tyre force at some wheel. Instead of requesting a torque corresponding to the desired tyre force, the VMM can translate the desired tyre force into an equivalent wheel slip (or, equivalently, a wheel speed relative to a speed over ground) and request this slip instead. The main advantage being that the MSD control device 330 will be able to deliver the requested torque with much higher bandwidth by maintaining operation at the desired wheel slip, using the vehicle speed *vₓ* from the vehicle speed sensor and the wheel rotational velocity *ωₓ*, obtained from the wheel speed sensor.

With continued reference to Figure 3, the TSM function 310 generates vehicle motion requests which may comprise a desired curvature c_{req} to be followed by the vehicle, and desired vehicle unit accelerations a_{req}. Given the discussion above in connection to Figure 2, it is understood that the motion requests can be used as base for determining or predicting a required amount of longitudinal and lateral forces which needs to be generated in order to successfully complete a maneuver. The requests 315 from the TSM function 310 are examples of vehicle control commands issued to control motion by the vehicle 100. These requests 315 may be generated manually by a driver using an accelerator pedal, brake pedal, and steering wheel, or by an autonomous system controlling the vehicle 100. Advanced driver assistance systems (ADAS) may also be used to generate some or all of the vehicle control commands 315.

The VMM system 320 operates with a time horizon of about 1 second or so, and continuously transforms the acceleration profiles a_{req} and curvature profiles c_{req} from the TSM function 310 into vehicle control commands 331, 332, 333 for controlling vehicle motion functions, actuated by the different MSDs of the vehicle 100 which report back capabilities 334, 335, 336 to the VMM function 320, which in turn are used as constraints in the vehicle control.

The VMM system 320 performs vehicle state or motion estimation 350, i.e., the VMM system 320 continuously determines a vehicle state s(t) as function of time t comprising positions, speeds, accelerations, and articulation angles of the different units in the vehicle combination by monitoring operations using various sensors 340 arranged on the vehicle 100, often but not always in connection to the MSDs. A state prediction function 355 may also be arranged, which predicts vehicle motion state some time T ahead, i.e., s(t+T).

The result of the state estimation 350, i.e., the estimated vehicle state s, is input to a force generation module 360 which determines the required global forces **V**=[V₁, V₂] for the different vehicle units to cause the vehicle 100 to move according to the requested acceleration and curvature profiles a_{req}, c_{req}, and to behave according to the desired vehicle behavior. The required global force vector **V** is input to an MSD coordination function 370 which allocates wheel forces and coordinates other MSDs such as steering and suspension. The MSD coordination function outputs an MSD control allocation 325 for the i:th wheel, which may comprise any of a torque Tᵢ, a longitudinal wheel slip λᵢ, a wheel rotational speed ωᵢ, and/or a wheel steering angle δᵢ. This is another example of a vehicle control command 325 issued to control motion by the vehicle 100. The coordinated MSDs then together provide the desired lateral Fy and longitudinal Fx forces on the vehicle units, as well as the required moments Mz, to obtain the desired motion by the vehicle combination 100, as long as the configured vehicle parameters 390 are reasonably correct.

Thus, according to some aspects of the present disclosure, the VMM system 320 manages both force generation and MSD coordination, i.e., it determines what forces that are required at the vehicle units in order to fulfil the requests from the TSM function 310, for instance to accelerate the vehicle according to a requested acceleration profile requested by TSM and/or to generate a certain curvature motion by the vehicle also requested by TSM. The forces may comprise e.g., yaw moments Mz, longitudinal forces Fx and lateral forces Fy, as well as different types of torques to be applied at different wheels. The forces are determined such as to generate the vehicle behavior which is expected by the TSM function in response to the control inputs generated by the TSM function 310.

Normally, the state estimation functions 350, 355, the force generation function 360, and the MSD coordination function 370 rely on a set of configured vehicle parameters 390 which describes the properties of the vehicle 100 and the environment surrounding the vehicle, as well as the properties of the road surface. In case errors are introduced into this set of configured vehicle parameters 390, the state estimation may become flawed, and in particular the state prediction which relies on extrapolation of current vehicle state into the future that relies heavily on vehicle properties such as weight, geometry, and so on. The force generation function 360 may also suffer in case errors are introduced into the set of configured vehicle parameters 390, since the forces calculated to obtain a given vehicle behavior will most likely not be calculated correctly. Finally, the MSD coordination function 370 may become suboptimal in case the properties of the different actuators, such as the force generating capabilities of the different tyres, is not known with sufficient accuracy.

To monitor the accuracy of the set of configured vehicle parameters 390, a parameter monitor 380 has been introduced into the architecture 300. This parameter monitor uses a digital vehicle model comprising the same set of configured vehicle parameters 390 as used by the VMM functions 350, 355, 360, 370, or at least a subset thereof, to make sure that the behavior of the physical vehicle (as measured by the sensor systems 340 on the vehicle 100) agrees with the behavior of the vehicle model as a sequence of vehicle control commands are issued that cause the vehicle state to evolve over time. If this is not the case, i.e., if the vehicle model behaves differently compared to the physical vehicle, an action by the vehicle is automatically triggered. An alarm signal or notification 385 to the TSM function 310 may for instance be generated. The configuration of the VMM function 320 may also be adapted in response to detecting a discrepancy between modelled vehicle behavior and actual vehicle behavior, such as a reduction in vehicle speed, or a reduction in allowable lateral force.

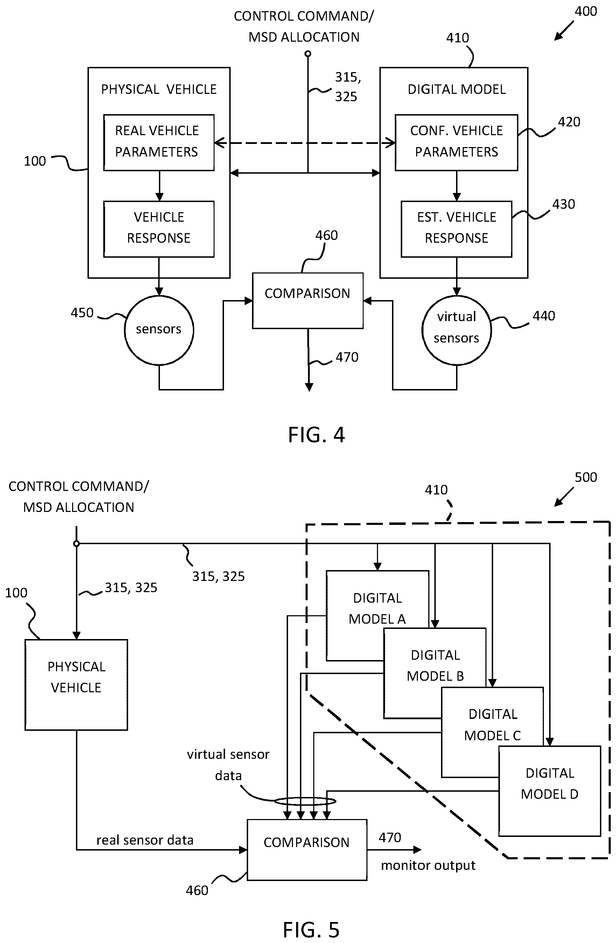

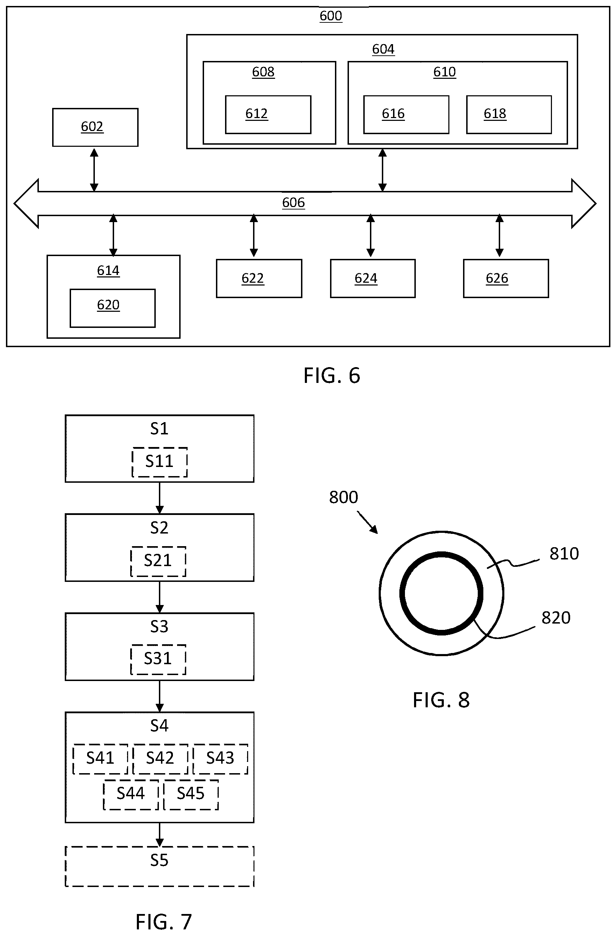

With reference also to Figure 4 and Figure 6 there is disclosed herein a computer system 130, 600 for controlling a vehicle 100 such as a truck, semi-trailer, or other type of heavy-duty vehicle. The computer system 130, 600 comprises processing circuitry which will be discussed in more detail below in connection to Figure 6. The processing circuitry can be implemented solely on-board the vehicle or distributed over different entities, possibly also comprising processing circuitry located remotely from the vehicle 100. The processing circuitry is configured to obtain a vehicle model 410 comprising a set of configured vehicle parameters 420. The vehicle model 410 is arranged to estimate a motion response by the vehicle 100 to a control command 315, 325 based on the set of configured vehicle parameters 420. The vehicle model 410 may be pre-configured in a memory of the computer system, and/or developed at least partly during operation of the vehicle. The configured vehicle parameters may also be pre-configured at the factory, obtained as part of a software update, or developed in real time during operation of the vehicle. The control command can, e.g., be a driver input command such as an acceleration request or a curvature request, or a control command from an autonomous drive system. The vehicle model 410 may be any known vehicle dynamics model, such as a one-track "bicycle model", a double track model, or a more advanced vehicle model. The model can also be set up to capture various physical phenomena depending on what type of output the digital twin should compute. For example, a roll angle output would require a vehicle dynamics model including spring, dampers, anti-roll bars etc., while a yaw rate output instead would need other physics that describes the lateral motion of the vehicle, for example modelled relationships between wheel slip and generated tyre forces. The vehicle model may generally comprise a set of equations that model the evolution of vehicle state, such as its speeds and accelerations in different directions, in response to force generated by actuators on the vehicle. Many different models of vehicle dynamics, of varying complexity, are known and will therefore not be discussed in more detail herein. The vehicle model is parametrized, i.e., set up, based on the set of configured vehicle parameters 390, 420, such as the weight of the vehicle, its geometry, and its center of gravity. The vehicle model 410 in a way simulates what effect a given control command will have on the vehicle. The model can in some realizations be a deterministic model, but it may be preferable to let the model compute the nominal value of the output and also the confidence of the output. Confidence may for instance mean the likelihood of getting a reliable nominal value. Confidence is conceptually the inverse of the variance of an estimate. To allow confidence to be computed, the inputs to the digital twin must also be composed of nominal value and confidence. By applying standard methods, e.g., propagation of uncertainties, the confidence of the output can be computed. The confidence of the digital twin's (i.e., the vehicle model 410) outputs are often key to the decision-making process. When there is a large deviation between the output from the vehicle model 410 and the real sensor data, and at the same time a high confidence, it is likely that an action should be triggered, such as an emergency stop maneuver by the vehicle.

The properties of the tyres and how they interact with the road surface may also be included in the vehicle model, as can the properties of the environment surrounding the vehicle, such as road friction, wind speed and direction, presence of rain and water on the road surface, snow, and so on. Since the motion of the vehicle is generated by forces in the contact patches between tyres and road surface in combination with external forces acting on the vehicle body, such as wind, these must be directly measured (by windspeed sensors, radars, etc.) or indirectly measured (e.g., by an IMU) to replicate the motion of the vehicle.

The set of configured vehicle parameters 390, 420 together decide, at least approximately, how the vehicle model will evolve over time given a sequence of vehicle control commands. If the data in the set of vehicle parameters of the vehicle model is reasonably correct, then it can be expected that the digital vehicle model (having been stimulated by the same control inputs as the physical vehicle) will have a state that evolves in a manner aligned to the evolution in vehicle state of the physical vehicle, and vice versa. More than one vehicle model can be configured in the vehicle in this manner, where each model has a different set of configured vehicle parameters. The different models can then be used to see which set of vehicle parameters show the closest resemblance to actual vehicle motion. The processing circuitry is also configured to receive a vehicle control command 315, 325 issued to control motion by the vehicle 100, as discussed above or a control allocation sent to MSDs on the vehicle. This vehicle control command is, essentially, the same control command that is issued to the physical vehicle, and it may, e.g., comprise a request for acceleration, braking, or steering. The control command may also comprise a component related to an active suspension system of the vehicle, or some other type of MSD. In the most straight forward implementation of the herein proposed techniques, the interface to the vehicle model 410 is exactly the same as the interface to the VMM system of the vehicle 100, such that the exact same vehicle control command can be used by both the physical vehicle and by the vehicle model, as illustrated in Figure 4.

A problem solved by at least some versions of the herein disclosed techniques is to detect when actuator control commands are not passed through all the way to device actuation and force generation according to the original request. A request for wheel torque or steering may, e.g., be filtered out before the request reaches the actuator controller due to delays and congestion in vehicle communication data busses. The request may also exceed the current capabilities of the actuator and not result in the expected force generation. The physical vehicle is then likely to behave in a different manner compared to the digital model 410, which will be detected by the computer system.

The processing circuitry is configured to estimate a vehicle response 430 to the vehicle control command 315, 325 based on the vehicle model 410 and on the vehicle control command 315, 325, which optionally also comprises or is constituted by reported actuation by one or more vehicle controllers and actuators in response to the control command.

The vehicle response comprises a number of observable state variables 440 and a number of non-observable state variables. Which states are observable in a given vehicle depends both on the current sensor set-up of the vehicle, and also on the variables themselves. Wheel speeds are, for instance, normally observable, while vehicle speed over ground may or may not be observable depending on if the vehicle 100 is equipped with a ground speed sensor such as a radar system, a vision-based sensor, or a global positioning system with an unobstructed view of the sky, or not. Vehicle acceleration may be an observable state variable, depending, e.g., on if the vehicle comprises an IMU or not. The inverse tyre model is often not directly observable, i.e., it is a non-observable or hidden state variable. The tyre radius and the tyre slip stiffness parameters are often hidden state variables as well since they cannot be measured with sufficiently high bandwidth to detect an abrupt change which could potentially jeopardize safe vehicle motion control. The vehicle geometry and the vehicle weight are also normally non-observable state variables which have to be observed via other observable state variables such as vehicle acceleration in response to an applied force.

The processing circuitry is configured to obtain sensor measurements 450 of state variables of the heavy-duty vehicle 100 that correspond to the observable state variables of the vehicle model 410, and to determine a difference between the sensor measurements of the state variables 450 and the corresponding observable state variables of the vehicle model 410. This difference is indicative of the accuracy in the configured set of vehicle parameters. For instance, if the configured vehicle weight is higher than the actual weight of the vehicle, then the physical vehicle behavior in response to a vehicle control command will likely differ from the response by the vehicle model to the same vehicle control command. The same is true in case the relationship between wheel slip and wheel force is wrong. It is appreciated that there may be a need for time alignment between the output of the vehicle model and the monitored behavior, since unknown latencies may be introduced in the signal processing chain, e.g., in sensors and filtering operations. Time alignment may be obtained by correlating vehicle sensor data and digital vehicle model data. An introduced error in time alignment will result in a difference in between vehicle observed state and digital vehicle model state, even though the set of configured parameters is accurate. An error in time alignment will be detected due to this difference, which is an advantage.

Various ways of determining the above-mentioned difference between the sensor measurements of the state variables 450 and the corresponding observable state variables of the vehicle model 410 can be implemented. A magnitude of the difference is suitable for many variables. For instance, if the difference Δ*_{ωi}* between modelled wheel speed *ω̂ᵢ* and measured wheel speed *ωᵢ* for the *i*-th wheel 102 is to be determined, then ${Δ}_{ωi} = {\left({\hat{ω}}_{i}-{ω}_{i}\right)}^{2}$ may be a suitable difference metric. The statistical distributions of the measurements of the state variables 450 and the corresponding observable state variables of the vehicle model 410 can also be determined. The means and sample variances of the measurements of the state variables 450 and the corresponding observable state variables of the vehicle model 410 can be determined and used as difference metrics. A plurality of difference metrics can be determined and weighted together to form the difference between the sensor measurements of the state variables 450 and the corresponding observable state variables of the vehicle model 410. A suitable set of metrics to use can be determined from practical experimentation and/or from computer simulation.

The processing circuitry is furthermore configured to trigger an action by the heavy-duty vehicle 100 in case the difference does not satisfy a predetermined acceptance criterion. This action is an automated action which can comprise a number of hazard mitigating and/or performance enhancing adjustments of the vehicle control, as will be discussed in more detail below. The vehicle control command 315 sent to the physical vehicle controller and to the vehicle model preferably comprises both the requested acceleration *a_{req}* by the different vehicle units and the requested curvature *c_{req}* by the different vehicle units. This vehicle control command may correspond to the pedal and steering wheel input from a driver, or the requested motion sent to the vehicle control system by an autonomous driving algorithm or by an advanced driver assistance system, such as a lane keeping system and/or an automated cruise control system. The vehicle control command 325 may also comprise or even be constituted by a motion support device control allocation, i.e., a set of control parameters {*λᵢ, δᵢ, Tᵢ, ωᵢ*} for wheel slip, wheel speed, torque and/or steering angle of one or more steered axles on the vehicle. In this case the same motion support device control allocation can be used for the digital vehicle model and for the physical vehicle, and the difference in behavior can be evaluated by the computer system in order to check that the physical vehicle behaves as expected, i.e., in a manner not too different from that of the digital vehicle model which has been stimulated by the same motion support device control allocation.

The configured vehicle parameters 390, 420 optionally comprises a relationship between wheel slip and wheel longitudinal force *Fₓ* and/or a relationship between wheel slip and wheel lateral force capability *F_{y},* as discussed above in connection to Figure 2. This relationship is important, especially in case wheel slip control or wheel speed control of the wheels on the vehicle is used instead of the classic torque-based wheel actuator control. Different types of wheels have different inverse tyre models, and a given wheel slip or speed will not correspond to the desired wheel force if the relationship configured in the vehicle control system does not match the correct one. The peak obtainable force 230, indicated in Figure 2 as the product of friction coefficient *µ* and normal force *F_{z}* may be off by an amount. If any of these vehicle parameters are erroneously configured, then the vehicle control system may expect a wheel force from a wheel which is not possible to generate, i.e., a wheel force command that exceeds the capability of the wheel. However, when this happens, and the present computer system 130, 600 for controlling the heavy-duty vehicle 100 is implemented, the monitor will trigger, since the behavior of the physical vehicle, as observed via the sensor signals, will likely differ from the behavior of the vehicle model in response to the same vehicle control command. The parameters that hold information regarding the tyre radii *Rᵢ, i* = 1 ... *N* of the *N* wheels on a given vehicle may also be associated with error. If the tyre radius information has too high error, then the translation between wheel speed and vehicle or tyre speed will not be correct, even if the vehicle speed over ground is determined precisely. This will also result in a wheel force that differs from an expected wheel force in case wheel slip or wheel speed-based control is used in the vehicle. The configured vehicle parameters 390, 420 may generally comprise any of: a road friction coefficient *µ*, a road surface normal force *F_{z}*, a tyre radius *Rᵢ*, as well as a tyre slip stiffness parameter *Cₓ*.

The configured vehicle parameters 390, 420 may also comprise any of: a geometry of the heavy-duty vehicle 100, a weight of the heavy-duty vehicle 100, a suspension pressure on an axle of the heavy-duty vehicle, and a center of gravity of the heavy-duty vehicle. The geometry may, e.g., be indicative of a track width of the vehicle 100, a wheelbase length of the vehicle 100, a rigidity of the vehicle chassis, and so on. These are important parameters that determine how the vehicle will respond to an applied force at some location on the vehicle, i.e., a braking torque applied at a front wheel, an applied steering angle, or a propulsion force applied at a trailer axle. This geometry often does not change during operation, although damage may result in a change in vehicle behavior. The geometry of the vehicle may still be associated with error, e.g., if the wrong set of vehicle parameters 390, 420 is configured by a given vehicle, such as wheelbase, track width, and so on. The weight of a vehicle unit, such as a trailer or a truck, and the center of gravity of the vehicle units may change more abruptly, e.g., as the vehicle receives a load or as cargo shifts in the cargo hold of a truck. An abrupt change in weight and/or an abrupt change in the location of the center of gravity will often result in a change in the behavior of a vehicle in response to an applied force. Given the monitoring systems discussed herein, a difference between vehicle model behavior and physical vehicle behavior will be noticed, such that an automated action can be triggered to mitigate the consequences of the error in the set of configured vehicle parameters 390, 420. Suspension pressure can be measured using bellow pressure, or linear encoders in combination with a mapping from linear displacement of the suspension to applied weight.

The vehicle model 410 is optionally arranged to determine any of: a lateral and/or longitudinal speed, a lateral and/or longitudinal acceleration, a yaw rate, a pitch rate, a roll rate, of the digitally modelled vehicle 100 in response to the control command 315, 325, based on the set of configured vehicle parameters 420. These vehicle state parameters are observable in the sense that they can be measured also on the physical vehicle and compared to the corresponding values determined by the vehicle model. For instance, if the vehicle model responds with a larger acceleration to an applied wheel force compared to an IMU output associated with the same acceleration by the physical vehicle, then the vehicle weight may be off by an amount, or some other discrepancy between one or more variables in the set of configured vehicle parameters 390, 420 has been introduced. The sensor measurements 450 of the state variables of the heavy-duty vehicle 100 may comprises any of: vehicle speed over ground data, IMU data indicative of vehicle acceleration, wheel speed sensor data indicative of wheel rotary motion, steering angle data, and wheel torque data. These quantities can be measured by using known sensor technology. Vehicle speed over ground may be determined by using a global positioning system, or by onboard systems such as a ground speed radar as discussed in US 4,845,506 or a vision-based system arranged to determine vehicle speed relative to stationary objects in the vehicle surroundings. Given one or more sensor measurements indicative of the vehicle behavior, i.e., the motion by the vehicle in response to vehicle control commands, it is possible to verify that the response by the physical vehicle to the vehicle control command matches that of the vehicle model to the same control command. If this is the case, then the set of configured vehicle parameters 390, 420 may be trusted, whereas if a too large difference is observed something may be wrong in the parameter configuration. There may also be non-observable parameters connected to the sensors, such as current biases of the IMU or IMUs on the vehicle.

To improve performance further, the processing circuitry can be configured to process the observable state variables of the vehicle model 410 using respective sensor models 440. This way the influence of the sensor technology is also accounted for when determining the difference between the sensor measurements of the state variables 450 and the corresponding observable state variables of the vehicle model 410. The difference between the real sensor output data and the state variables of the digital model 410 may be evaluated over a time period, such that outliers can be identified and removed. A given sensor type may, for instance, introduce measurement noise and/or latency when observing the vehicle state. A sensor may also be associated with quantization noise which has an effect on the difference between measured physical vehicle behavior and modelled behavior. A given sensor technology arranged to measure a state variable x (such as wheel speed, acceleration, weight) may be modelled as outputting sensor data *y* $y = f \left(x\right) + b + n$ where *f*(*x*) is a known function of the state variable, such as *f*(*x*) *= x* or *f*(*x*) *=* |*x*|, *b* is a constant bias and *n* is a noise term with an assumed noise distribution, such as white Gaussian noise of a given variance. These sensor models can be included when determining the difference between the sensor measurements of the state variables 450 and the corresponding observable state variables of the vehicle model 410.

The acceptance criterion may, generally, comprise a comparison of the difference in relation to a predetermined threshold value or acceptable range of differences. A metric indicative of the difference is then determined and compared to a predetermined range. If the difference falls outside of this range, then the action is triggered. More advanced tests can also be applied, such as a statistical test applied to the difference. The statistical test then checks to see if the determined difference, or a time sequence of determined differences, satisfies a statistical test.

It may, e.g., be required that a time sequence of differences adheres to some predetermined statistical distribution, such as a zero-mean Gaussian distribution or some other type of statistical distribution. There are many statistical tests known in the literature which can be applied in this context. Statistical tests will therefore not be discussed in more detail herein. The vehicle model 410 may comprises a model of vehicle dynamics, such as a mathematical model comprising one or more equations that describe how the vehicle state evolves over time in response to applied forces, both from internal actuators and from the surrounding environment. A single-track "bicycle" model may be advantageously applied, due to the limited computational burden associated with such simple models. More advanced models can also be used, such as double track models, models with lumped axles, as well as advanced vehicle dynamics simulators that can be run in real time or close to real time. In this respect it is noted that the digital twin based vehicle behavior monitors discussed herein are not real time systems, i.e. some latency is acceptable in determining the difference between the sensor measurements of the state variables and the corresponding observable state variables of the vehicle model and triggering the action by the heavy-duty vehicle. This is because the result of the monitoring process is used for verification, in parallel with the vehicle control, and does not form part of the real-time vehicle control system per se. For this reason, it may be advantageous to apply some averaging or time-window based processing, where the difference between vehicle model behavior and physical vehicle behavior is determined over a time period, and where the action is only triggered if the difference persists over the time period. Various low-pass filters and the like may also be applied to the sensor data from the physical vehicle and to the output data from the vehicle model.

The vehicle model 410 optionally also comprises a machine learning structure, such as a neural network or a random forest classifier structure. This machine learning structure is trained using sensor data from physical vehicles having different vehicle parameters, and/or by synthetic data collected from computer simulation of different vehicle types with different parameters. For example, a set of different machine learning structures can be trained using different vehicle parameters to generate output indicative of sensor measurements in response to various vehicle control commands. A sufficiently trained machine learning structure will then be able to predict sensor output signals of a given vehicle having the vehicle parameters in response to a sequence of vehicle control commands. A given vehicle type is then assigned a machine learning structure that fits the vehicle. As the vehicle is operated, the machine learning structure is fed with the same control input commands as the physical vehicle, and the machine learning structure will then provide an output indicative of expected vehicle sensor signals. This output can then be compared to the real sensor measurements from the vehicle, and a difference can be determined as discussed above. The machine learning structure can also be refined over time for a given vehicle, i.e., updated using the sensor signals from the physical vehicle in response to various sequences of control commands. In this case the machine learning structure is fed by the vehicle control commands as the vehicle is operated, and the sensor output from the different vehicle sensors is used to adapt the machine learning structure to mimic the sensor output for a given vehicle control command and vehicle state.

The triggered action by the heavy-duty vehicle 100 may comprise a warning signal 385 issued to a driver of the vehicle 100, or a notification 385 sent to an autonomous or semi-autonomous control system of the vehicle 100. The triggered action by the heavy-duty vehicle 100 also comprises a change in operational design domain (ODD) of the vehicle 100. The ODD decides what vehicle states are allowable and which range of vehicle states are not considered safe for the vehicle. The ODD may, for instance, comprise a range of acceptable velocities that the vehicle may be operated with. A change in ODD may therefore comprise a reduction in the maximum allowable vehicle speed over ground until the suspected error in the set of configured vehicle parameters can be fixed. A change in ODD may also comprise a limitation in the allowable magnitude of lateral forces that the vehicle is subjected to, or a limitation in yaw rate, or a limitation in steering angle as function of vehicle speed over ground. In essence, the change in ODD in response to detecting a too large difference between expected vehicle behavior and actual vehicle behavior in response to a vehicle control command results in that the vehicle is operated with more caution. The triggered action by the heavy-duty vehicle 100 may also comprise an emergency stop operation, or other situation avoidance maneuver, where the vehicle is navigated to a safe place and brought to a full stop. This action can be triggered if a particularly large difference between modelled vehicle behavior in response to the vehicle control command and the actual vehicle behavior is detected.

Figure 5 illustrates another example 500 of the teachings herein. In this case the vehicle model 410 comprises a plurality of vehicle sub-models (labelled model A-D in Figure 5) based on different models of vehicle dynamics. Each vehicle model 410 is arranged to determine a respective motion response by the vehicle 100 to the control command 315, 325, and the processing circuitry is configured to determine a variation in the respective motion responses, and to control the vehicle 100 based on the determined variation. A large variation in the outputs of the different models is indicative of uncertainty, and it may be advisable to trigger some mitigating action in case the variation in the model outputs become too large. As long as the different models all give similar output it can be assumed that the parameterization corresponds well to the actual parameter set of the physical vehicle 100.

The computer system may also be configured to select a vehicle sub-model out of the plurality of vehicle sub-models based on the differences between the sensor measurements of the state variables 450 and the corresponding observable state variables of the vehicle sub-models. This sub-model can then be used to determine the difference and trigger the action. This way a choice of suitable model of vehicle dynamics can be made in an automated manner, which is an advantage.

Figure 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include a processor device 602 (may also be referred to as a control unit), a memory 604, and a system bus 606. The computer system 600 may include at least one computing device having the processor device 602. The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with a processor device 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program product 620 stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller or control system for the computer system 600 that is to implement the functionality described herein.

The computer system 600 also may include an input device interface 622 (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may also include a communications interface 626 suitable for communicating with a network as appropriate or desired.

Figure 8 illustrates a computer readable medium 810 carrying a computer program comprising program code means 820 for performing the methods illustrated in Figure 7 and the techniques discussed herein, when said program product is run on a computer. The computer readable medium and the code means may together form a computer program product 800.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

Figure 7 shows a flow chart that illustrates a method which summarizes at least some of the discussion above. Figure 7 illustrates a computer-implemented method for controlling a heavy-duty vehicle 100. The method comprises obtaining S1, by the processing circuitry of the computer system discussed above, a vehicle model 410 comprising a set of configured vehicle parameters 390, 420, where the vehicle model 410 is arranged to estimate a motion response by the vehicle 100 to a control command 315, 325 based on the set of configured vehicle parameters 390, 420, receiving S2, by the processing circuitry, a vehicle control command 315, 325 issued to control motion by the vehicle 100, estimating S3, by the processing circuitry, a vehicle response 430 to the vehicle control command 315, 325 based on the vehicle model 410 and on the vehicle control command 315, 325, where the vehicle response comprises a number of observable state variables 440 and a number of non-observable state variables, obtaining S4, by the processing circuitry, sensor measurements 450 of state variables of the heavy-duty vehicle 100 corresponding to the observable state variables of the vehicle model 410, determining S5, by the processing circuitry, a difference between the sensor measurements of the state variables 450 and the corresponding observable state variables of the vehicle model 410, and triggering S6, by the processing circuitry, an action by the heavy-duty vehicle 100 in case the difference does not satisfy a predetermined acceptance criterion. It is appreciated that all of the aspects of the processing circuitry and the vehicles discussed above can be cast as corresponding methods that are performed by the processing circuitry and/or by the vehicles.

## Claims

1. A computer system (130, 600) for controlling a heavy-duty vehicle (100), the computer system (130, 600) comprising processing circuitry configured to:
obtain a vehicle model (410) comprising a set of configured vehicle parameters (390, 420), where the vehicle model (410) is arranged to estimate a motion response by the vehicle (100) to a control command (315, 325) based on the set of configured vehicle parameters (390, 420), receive a vehicle control command (315, 325) issued to control motion by the vehicle (100), estimate a vehicle response (430) to the vehicle control command (315, 325) based on the vehicle model (410) and on the vehicle control command (315, 325), where the vehicle response comprises a number of observable state variables (440) and a number of non-observable state variables,
obtain sensor measurements (450) of state variables of the heavy-duty vehicle (100) corresponding to the observable state variables of the vehicle model (410),
determine a difference between the sensor measurements of the state variables (450) and the corresponding observable state variables of the vehicle model (410), and to automatically trigger an action by the heavy-duty vehicle (100) in case the difference does not satisfy a predetermined acceptance criterion, **characterised in that** the triggered action by the heavy-duty vehicle (100) comprises a change in operational design domain, ODD, of the vehicle (100).

2. The computer system of claim 1, where the set of configured vehicle parameters (390, 420) comprises a relationship (200) between wheel slip and wheel longitudinal force (*Fₓ*) and/or a relationship (200) between wheel slip and wheel lateral force capability (*F_{y}*).

3. The computer system of claim 1 or 2, where the set of configured vehicle parameters (390, 420) comprises any of: a road friction coefficient (*µ*), a road surface normal force (*F_{z}*), a tyre radius (*Rᵢ*), and a tyre slip stiffness (*Cₓ*).

4. The computer system of any of claims 1-3, where the set of configured vehicle parameters (390, 420) comprises any of: a geometry of the heavy-duty vehicle (100), a weight of the heavy-duty vehicle (100), a suspension pressure on an axle of the heavy-duty vehicle, and a center of gravity of the heavy-duty vehicle.

5. The computer system of any of claims 1-4, where the vehicle model (410) is arranged to determine any of: a lateral and/or longitudinal speed, a lateral and/or longitudinal acceleration, a yaw rate, a pitch rate, a roll rate, of the modelled vehicle in response to the control command (315, 325), based on the set of configured vehicle parameters (390, 420).

6. The computer system of any of claims 1-5, where the vehicle control command (315) comprises a requested acceleration (*a_{req}*) and/or a requested curvature (*c_{req}*) by the vehicle (100).

7. The computer system of any of claims 1-6, where the vehicle control command (325) comprises a motion support device control allocation ({*λᵢ, δᵢ, Tᵢ, ωᵢ*}).

8. The computer system of any of claims 1-7, where the sensor measurements (450) of the state variables of the heavy-duty vehicle (100) comprises any of: inertial measurement unit, IMU, data indicative of vehicle acceleration, wheel speed sensor data indicative of wheel rotary motion, steering angle data, and wheel torque data.

9. The computer system of any of claims 1-8, where processing circuitry is configured to process the observable state variables of the vehicle model (410) using respective sensor models (440).

10. The computer system of any of claims 1-9, where the acceptance criterion comprises a comparison of the difference in relation to a predetermined threshold value or acceptable range of differences.

11. The computer system of any of claims 1-10, where the acceptance criterion comprises a statistical test applied to the difference.

12. The computer system of any of claims 1-11, where the vehicle model (410) comprises a model of vehicle dynamics.

13. The computer system of any of claims 1-12, where the vehicle model (410) comprises a machine learning structure.

14. The computer system of any of claims 1-13, where the triggered action by the heavy-duty vehicle (100) comprises a warning signal (385) issued to a driver of the vehicle (100).

15. The computer system of any of claims 1-14, where the triggered action by the heavy-duty vehicle (100) comprises a notification (385) sent to an autonomous or semi-autonomous control system of the vehicle (100).

16. The computer system of any of claims 1-15, where the triggered action by the heavy-duty vehicle (100) comprises a reduction in maximum vehicle speed over ground.

17. The computer system of any of claims 1-16, where the triggered action by the heavy-duty vehicle (100) comprises an emergency stop operation.

18. The computer system of any of claims 1-17, where the vehicle model (410) comprises a plurality of vehicle sub-models based on different sets of configured vehicle parameters (390, 420), where each vehicle sub-model (410) is arranged to determine a respective motion response by the vehicle (100) to the control command (315, 325), where the processing circuitry is configured to determine a variation in the respective motion responses estimated by the sub-models, and to control the vehicle (100) based on the determined variation.

19. The computer system of claim 18, where the processing circuitry is configured to select a vehicle sub-model out of the plurality of vehicle sub-models based on the differences between the sensor measurements of the state variables (450) and the corresponding observable state variables of the vehicle sub-models.

20. A vehicle comprising the computer system of any of claims 1-19.

21. A computer-implemented method for controlling a heavy-duty vehicle (100), comprising obtaining (S1), by processing circuitry of a computer system, a vehicle model (410) comprising a set of configured vehicle parameters (390, 420), where the vehicle model (410) is arranged to estimate a motion response by the vehicle (100) to a control command (315, 325) based on the set of configured vehicle parameters (390, 420),
receiving (S2), by the processing circuitry, a vehicle control command (315, 325) issued to control motion by the vehicle (100),
estimating (S3), by the processing circuitry, a vehicle response (430) to the vehicle control command (315, 325) based on the vehicle model (410) and on the vehicle control command (315, 325), where the vehicle response comprises a number of observable state variables (440) and a number of non-observable state variables,
obtaining (S4), by the processing circuitry, sensor measurements (450) of state variables of the heavy-duty vehicle (100) corresponding to the observable state variables of the vehicle model (410),
determining (S5), by the processing circuitry, a difference between the sensor measurements of the state variables (450) and the corresponding observable state variables of the vehicle model (410), and
triggering (S6), by the processing circuitry, an action by the heavy-duty vehicle (100) in case the difference does not satisfy a predetermined acceptance criterion, wherein the triggered action by the heavy-duty vehicle (100) comprises a change in operational design domain, ODD, of the vehicle (100).

22. A computer program product comprising program code for performing, when executed by the processing circuitry, the method of claim 21.

23. A non-transitory computer-readable storage medium comprising instructions, which when executed by processing circuitry, cause the processing circuitry to perform the method of claim 21.

## Patentansprüche

1. Computersystem (130, 600) zum Steuern eines Schwerlastfahrzeugs (100), wobei das Computersystem (130, 600) eine Verarbeitungsschaltung umfasst, die dazu konfiguriert ist:
ein Fahrzeugmodell (410) zu erhalten, umfassend einen Satz von konfigurierten Fahrzeugparametern (390, 420), wobei das Fahrzeugmodell (410) angeordnet ist, um eine Bewegungsreaktion durch das Fahrzeug (100) auf einen Steuerbefehl (315, 325) basierend auf dem Satz von konfigurierten Fahrzeugparametern (390, 420) zu schätzen, einen Fahrzeugsteuerbefehl (315, 325), der ausgegeben wird, um Bewegung durch das Fahrzeug (100) zu steuern, zu empfangen, eine Fahrzeugreaktion (430) auf den Fahrzeugsteuerbefehl (315, 325) basierend auf dem Fahrzeugmodell (410) und auf dem Fahrzeugsteuerbefehl (315, 325) zu schätzen, wobei die Fahrzeugreaktion eine Anzahl von beobachtbaren Zustandsvariablen (440) und eine Anzahl von nicht beobachtbaren Zustandsvariablen umfasst,
Sensormessungen (450) von Zustandsvariablen des Schwerlastfahrzeugs (100) zu erhalten, die den beobachtbaren Zustandsvariablen des Fahrzeugmodells (410) entsprechen, eine Differenz zwischen den Sensormessungen der Zustandsvariablen (450) und den entsprechenden beobachtbaren Zustandsvariablen des Fahrzeugmodells (410) zu bestimmen, und
automatisch eine Aktion durch das Schwerlastfahrzeug (100) auszulösen, falls die Differenz ein vorbestimmtes Akzeptanzkriterium nicht erfüllt, **dadurch gekennzeichnet, dass** die ausgelöste Aktion durch das Schwerlastfahrzeug (100) eine Änderung der Betriebsentwurfsdomäne, ODD, des Fahrzeugs (100) umfasst.

2. Computersystem nach Anspruch 1, wobei der Satz von konfigurierten Fahrzeugparametern (390, 420) eine Beziehung (200) zwischen Radschlupf und Radlängskraft (Fx) und/oder eine Beziehung (200) zwischen Radschlupf und Radseitenkraftfähigkeit (Fy) umfasst.

3. Computersystem nach Anspruch 1 oder 2, wobei der Satz von konfigurierten Fahrzeugparametern (390, 420) eines beliebige von Folgendem umfasst: einen Straßenreibungskoeffizienten (µ), eine Straßenoberflächennormalkraft (F_{z}), einen Reifenradius (Rᵢ), und eine Reifenschlupfsteifigkeit (Cₓ).

4. Computersystem nach einem der Ansprüche 1-3, wobei der Satz von konfigurierten Fahrzeugparametern (390, 420) eines beliebige von Folgendem umfasst: eine Geometrie des Schwerlastfahrzeugs (100), ein Gewicht des Schwerlastfahrzeugs (100), einen Aufhängungsdruck auf eine Achse des Schwerlastfahrzeugs, und einen Schwerpunkt des Schwerlastfahrzeugs.

5. Computersystem nach einem der Ansprüche 1-4, wobei das Fahrzeugmodell (410) angeordnet ist, um eines beliebige von Folgendem zu bestimmen: eine laterale und/oder longitudinale Geschwindigkeit, eine laterale und/oder longitudinale Beschleunigung, eine Gierrate, eine Nickrate, eine Rollrate, des modellierten Fahrzeugs als Reaktion auf den Steuerbefehl (315, 325), basierend auf dem Satz von konfigurierten Fahrzeugparametern (390, 420).

6. Computersystem nach einem der Ansprüche 1-5, wobei der Fahrzeugsteuerbefehl (315) eine angeforderte Beschleunigung (a_{req}) und/oder eine angeforderte Krümmung (c_{req}) durch das Fahrzeug (100) umfasst.

7. Computersystem nach einem der Ansprüche 1-6, wobei der Fahrzeugsteuerbefehl (325) eine Steuerzuweisung für eine Bewegungsunterstützungsvorrichtung ({λᵢ, δᵢ, Tᵢ, ωᵢ}) umfasst.

8. Computersystem nach einem der Ansprüche 1-7, wobei die Sensormessungen (450) der Zustandsvariablen des Schwerlastfahrzeugs (100) eines beliebige von Folgendem umfassen: Daten einer inertialen Messeinheit, IMU, die eine Fahrzeugbeschleunigung angeben, Raddrehzahlsensordaten, die eine Raddrehbewegung angeben, Lenkwinkeldaten, und Raddrehmomentdaten.

9. Computersystem nach einem der Ansprüche 1-8, wobei Verarbeitungsschaltung dazu konfiguriert ist, die beobachtbaren Zustandsvariablen des Fahrzeugmodells (410) unter Verwendung jeweiliger Sensormodelle (440) zu verarbeiten.

10. Computersystem nach einem der Ansprüche 1-9, wobei das Akzeptanzkriterium einen Vergleich der Differenz in Bezug auf einen vorbestimmten Schwellenwert oder akzeptablen Bereich von Differenzen umfasst.

11. Computersystem nach einem der Ansprüche 1-10, wobei das Akzeptanzkriterium einen statistischen Test umfasst, der auf die Differenz angewendet wird.

12. Computersystem nach einem der Ansprüche 1-11, wobei das Fahrzeugmodell (410) ein Modell der Fahrzeugdynamik umfasst.

13. Computersystem nach einem der Ansprüche 1-12, wobei das Fahrzeugmodell (410) eine Maschinelles-Lernen-Struktur umfasst.

14. Computersystem nach einem der Ansprüche 1-13, wobei die ausgelöste Aktion durch das Schwerlastfahrzeug (100) ein Warnsignal (385) umfasst, das an einen Fahrer des Fahrzeugs (100) ausgegeben wird.

15. Computersystem nach einem der Ansprüche 1-14, wobei die ausgelöste Aktion durch das Schwerlastfahrzeug (100) eine Benachrichtigung (385) umfasst, die an ein autonomes oder semi-autonomes Steuersystem des Fahrzeugs (100) gesendet wird.

16. Computersystem nach einem der Ansprüche 1-15, wobei die ausgelöste Aktion durch das Schwerlastfahrzeug (100) eine Verringerung der maximalen Fahrzeuggeschwindigkeit über Grund umfasst.

17. Computersystem nach einem der Ansprüche 1-16, wobei die ausgelöste Aktion durch das Schwerlastfahrzeug (100) einen Notstoppvorgang umfasst.

18. Computersystem nach einem der Ansprüche 1-17, wobei das Fahrzeugmodell (410) eine Vielzahl von Fahrzeug-Teilmodellen basierend auf unterschiedlichen Sätzen von konfigurierten Fahrzeugparametern (390, 420) umfasst, wobei jedes Fahrzeug-Teilmodell (410) angeordnet ist, um eine jeweilige Bewegungsreaktion durch das Fahrzeug (100) auf den Steuerbefehl (315, 325) zu bestimmen, wobei die Verarbeitungsschaltung dazu konfiguriert ist, eine Variation in den jeweiligen Bewegungsreaktionen, die durch die Teilmodelle geschätzt werden, zu bestimmen, und das Fahrzeug (100) basierend auf der bestimmten Variation zu steuern.

19. Computersystem nach Anspruch 18, wobei die Verarbeitungsschaltung dazu konfiguriert ist, ein Fahrzeug-Teilmodell aus der Vielzahl von Fahrzeug-Teilmodellen basierend auf den Differenzen zwischen den Sensormessungen der Zustandsvariablen (450) und den entsprechenden beobachtbaren Zustandsvariablen der Fahrzeug-Teilmodelle auszuwählen.

20. Fahrzeug, umfassend das Computersystem nach einem der Ansprüche 1-19.

21. Computerimplementiertes Verfahren zum Steuern eines Schwerlastfahrzeugs (100), umfassend Erhalten (S1), durch Verarbeitungsschaltung eines Computersystems, eines Fahrzeugmodells (410), umfassend einen Satz von konfigurierten Fahrzeugparametern (390, 420), wobei das Fahrzeugmodell (410) angeordnet ist, um eine Bewegungsreaktion durch das Fahrzeug (100) auf einen Steuerbefehl (315, 325) basierend auf dem Satz von konfigurierten Fahrzeugparametern (390, 420) zu schätzen,
Empfangen (S2), durch die Verarbeitungsschaltung, eines Fahrzeugsteuerbefehls (315, 325), der ausgegeben wird, um Bewegung durch das Fahrzeug (100) zu steuern,
Schätzen (S3), durch die Verarbeitungsschaltung, einer Fahrzeugreaktion (430) auf den Fahrzeugsteuerbefehl (315, 325) basierend auf dem Fahrzeugmodell (410) und auf dem Fahrzeugsteuerbefehl (315, 325), wobei die Fahrzeugreaktion eine Anzahl von beobachtbaren Zustandsvariablen (440) und eine Anzahl von nicht beobachtbaren Zustandsvariablen umfasst,
Erhalten (S4), durch die Verarbeitungsschaltung, von Sensormessungen (450) von Zustandsvariablen des Schwerlastfahrzeugs (100), die den beobachtbaren Zustandsvariablen des Fahrzeugmodells (410) entsprechen,
Bestimmen (S5), durch die Verarbeitungsschaltung, einer Differenz zwischen den Sensormessungen der Zustandsvariablen (450) und den entsprechenden beobachtbaren Zustandsvariablen des Fahrzeugmodells (410), und
Auslösen (S6), durch die Verarbeitungsschaltung, einer Aktion durch das Schwerlastfahrzeug (100), falls die Differenz ein vorbestimmtes Akzeptanzkriterium nicht erfüllt, wobei die ausgelöste Aktion durch das Schwerlastfahrzeug (100) eine Änderung der Betriebsentwurfsdomäne, ODD, des Fahrzeugs (100) umfasst.

22. Computerprogrammprodukt, umfassend Programmcode zum Durchführen, wenn er durch die Verarbeitungsschaltung ausgeführt wird, des Verfahrens nach Anspruch 21.

23. Nichtflüchtiges computerlesbares Speichermedium, umfassend Anweisungen, die, wenn sie durch Verarbeitungsschaltung ausgeführt werden, die Verarbeitungsschaltung veranlassen, das Verfahren nach Anspruch 21 durchzuführen.

## Revendications

1. Un système informatique (130, 600) destiné à contrôler un véhicule lourd (100), le système informatique (130, 600) comprenant une circuiterie de traitement configurée pour obtenir un modèle de véhicule (410) comprenant un ensemble de paramètres de véhicule configurés (390, 420), dans lequel le modèle de véhicule (410) est agencé pour estimer une réponse de mouvement par le véhicule (100) à une commande de contrôle (315, 325) sur la base de l'ensemble de paramètres de véhicule configurés (390, 420), recevoir une commande de contrôle de véhicule (315, 325) émise pour contrôler un mouvement par le véhicule (100), estimer une réponse de véhicule (430) à la commande de contrôle de véhicule (315, 325) sur la base du modèle de véhicule (410) et de la commande de contrôle de véhicule (315, 325), dans lequel la réponse de véhicule comprend un nombre de variables d'état observables (440) et un nombre de variables d'état non observables, obtenir des mesures de capteur (450) de variables d'état du véhicule lourd (100) correspondant aux variables d'état observables du modèle de véhicule (410), déterminer une différence entre les mesures de capteur des variables d'état (450) et les variables d'état observables correspondantes du modèle de véhicule (410), et pour déclencher automatiquement une action par le véhicule lourd (100) dans le cas où la différence ne satisfait pas à un critère d'acceptation prédéterminé, **caractérisé en ce que** l'action déclenchée par le véhicule lourd (100) comprend un changement de domaine de conception opérationnelle, ODD, du véhicule (100).

2. Le système informatique de la revendication 1, dans lequel l'ensemble de paramètres de véhicule configurés (390, 420) comprend une relation (200) entre un glissement de roue et une force longitudinale de roue (Fₓ) et/ou une relation (200) entre un glissement de roue et une capacité de force latérale de roue (F_{y}).

3. Le système informatique de la revendication 1 ou 2, dans lequel l'ensemble de paramètres de véhicule configurés (390, 420) comprend l'un quelconque parmi : un coefficient de frottement de route (µ), une force normale à la surface de route (F_{z}), un rayon de pneu (Rᵢ), et une rigidité au glissement de pneu (Cₓ).

4. Le système informatique de l'une quelconque des revendications 1-3, dans lequel l'ensemble de paramètres de véhicule configurés (390, 420) comprend l'un quelconque parmi : une géométrie du véhicule lourd (100), un poids du véhicule lourd (100), une pression de suspension sur un essieu du véhicule lourd, et un centre de gravité du véhicule lourd.

5. Le système informatique de l'une quelconque des revendications 1-4, dans lequel le modèle de véhicule (410) est agencé pour déterminer l'un quelconque parmi : une vitesse latérale et/ou longitudinale, une accélération latérale et/ou longitudinale, un taux de lacet, un taux de tangage, un taux de roulis, du véhicule modélisé en réponse à la commande de contrôle (315, 325), sur la base de l'ensemble de paramètres de véhicule configurés (390, 420).

6. Le système informatique de l'une quelconque des revendications 1-5, dans lequel la commande de contrôle de véhicule (315) comprend une accélération demandée (a_{req}) et/ou une courbure demandée (c_{req}) par le véhicule (100).

7. Le système informatique de l'une quelconque des revendications 1-6, dans lequel la commande de contrôle de véhicule (325) comprend une allocation de contrôle de dispositif de support de mouvement ({λᵢ, δᵢ, Tᵢ, ωᵢ}).

8. Le système informatique de l'une quelconque des revendications 1-7, dans lequel les mesures de capteur (450) des variables d'état du véhicule lourd (100) comprennent l'un quelconque parmi : des données d'unité de mesure inertielle, IMU, indicatives d'une accélération de véhicule, des données de capteur de vitesse de roue indicatives d'un mouvement rotatif de roue, des données d'angle de braquage, et des données de couple de roue.

9. Le système informatique de l'une quelconque des revendications 1-8, dans lequel la circuiterie de traitement est configurée pour traiter les variables d'état observables du modèle de véhicule (410) en utilisant des modèles de capteur respectifs (440).

10. Le système informatique de l'une quelconque des revendications 1-9, dans lequel le critère d'acceptation comprend une comparaison de la différence par rapport à une valeur seuil prédéterminée ou une plage acceptable de différences.

11. Le système informatique de l'une quelconque des revendications 1-10, dans lequel le critère d'acceptation comprend un test statistique appliqué à la différence.

12. Le système informatique de l'une quelconque des revendications 1-11, dans lequel le modèle de véhicule (410) comprend un modèle de dynamique de véhicule.

13. Le système informatique de l'une quelconque des revendications 1-12, dans lequel le modèle de véhicule (410) comprend une structure d'apprentissage automatique.

14. Le système informatique de l'une quelconque des revendications 1-13, dans lequel l'action déclenchée par le véhicule lourd (100) comprend un signal d'avertissement (385) émis à un conducteur du véhicule (100).

15. Le système informatique de l'une quelconque des revendications 1-14, dans lequel l'action déclenchée par le véhicule lourd (100) comprend une notification (385) envoyée à un système de contrôle autonome ou semi-autonome du véhicule (100).

16. Le système informatique de l'une quelconque des revendications 1-15, dans lequel l'action déclenchée par le véhicule lourd (100) comprend une réduction de la vitesse maximale du véhicule par rapport au sol.

17. Le système informatique de l'une quelconque des revendications 1-16, dans lequel l'action déclenchée par le véhicule lourd (100) comprend une opération d'arrêt d'urgence.

18. Le système informatique de l'une quelconque des revendications 1-17, dans lequel le modèle de véhicule (410) comprend une pluralité de sous-modèles de véhicule basés sur différents ensembles de paramètres de véhicule configurés (390, 420), dans lequel chaque sous-modèle de véhicule (410) est agencé pour déterminer une réponse de mouvement respective par le véhicule (100) à la commande de contrôle (315, 325), dans lequel la circuiterie de traitement est configurée pour déterminer une variation dans les réponses de mouvement respectives estimées par les sous-modèles, et pour contrôler le véhicule (100) sur la base de la variation déterminée.

19. Le système informatique de la revendication 18, dans lequel la circuiterie de traitement est configurée pour sélectionner un sous-modèle de véhicule parmi la pluralité de sous-modèles de véhicule sur la base des différences entre les mesures de capteur des variables d'état (450) et les variables d'état observables correspondantes des sous-modèles de véhicule.

20. Un véhicule comprenant le système informatique de l'une quelconque des revendications 1-19.

21. Un procédé mis en œuvre par ordinateur destiné à contrôler un véhicule lourd (100), comprenant l'obtention (S1), par une circuiterie de traitement d'un système informatique, d'un modèle de véhicule (410) comprenant un ensemble de paramètres de véhicule configurés (390, 420), dans lequel le modèle de véhicule (410) est agencé pour estimer une réponse de mouvement par le véhicule (100) à une commande de contrôle (315, 325) sur la base de l'ensemble de paramètres de véhicule configurés (390, 420),
la réception (S2), par la circuiterie de traitement, d'une commande de contrôle de véhicule (315, 325) émise pour contrôler un mouvement par le véhicule (100),
l'estimation (S3), par la circuiterie de traitement, d'une réponse de véhicule (430) à la commande de contrôle de véhicule (315, 325) sur la base du modèle de véhicule (410) et de la commande de contrôle de véhicule (315, 325), dans lequel la réponse de véhicule comprend un nombre de variables d'état observables (440) et un nombre de variables d'état non observables,
l'obtention (S4), par la circuiterie de traitement, de mesures de capteur (450) de variables d'état du véhicule lourd (100) correspondant aux variables d'état observables du modèle de véhicule (410),
la détermination (S5), par la circuiterie de traitement, d'une différence entre les mesures de capteur des variables d'état (450) et les variables d'état observables correspondantes du modèle de véhicule (410), et
le déclenchement (S6), par la circuiterie de traitement, d'une action par le véhicule lourd (100) dans le cas où la différence ne satisfait pas à un critère d'acceptation prédéterminé, dans lequel l'action déclenchée par le véhicule lourd (100) comprend un changement de domaine de conception opérationnelle, ODD, du véhicule (100).

22. Un produit programme d'ordinateur comprenant un code de programme pour mettre en œuvre, lorsqu'il est exécuté par la circuiterie de traitement, le procédé de la revendication 21.

23. Un support de stockage lisible par ordinateur non transitoire comprenant des instructions, qui lorsqu'elles sont exécutées par une circuiterie de traitement, amènent la circuiterie de traitement à mettre en œuvre le procédé de la revendication 21.
